# EUROPEAN PATENT SPECIFICATION

(11) **EP 2 990 905 B1**
(45) Date of publication and mention of the grant of the patent: **24.10.2018**
(21) Application number: 15179177.9
(22) Date of filing: 30.07.2015
(51) Int. Cl.: G06F 1/16, G06F 3/0484, G06F 3/0486

(54) **METHOD AND DEVICE FOR DISPLAYING IMAGE**
VERFAHREN UND VORRICHTUNG ZUM ANZEIGEN EINES BILDES
DISPOSITIF ET PROCEDE D'AFFICHAGE D'IMAGES

(30) Priority: 27.08.2014 CN 201410429471
(43) Date of publication of application: 02.03.2016
(73) Proprietor: Xiaomi Inc., Beijing 100085 (CN)
(72) Inventor: LI, Shen, Beijing 100085 (CN); ZHANG, Yuwen, Beijing 100085 (CN); CAI, Jingwei, Beijing 100085 (CN)
(74) Representative: Delumeau, François Guy

(56) References cited:
- JP-A- H10 333 821
- US-A1- 2005 001 815
- US-A1- 2008 048 980
- US-A1- 2011 102 455
- US-A1- 2012 026 197

## Description

### TECHNICAL FIELD

The invention generally relates to the field of computer technology, and more particularly, to a method and a device for displaying an image.

### BACKGROUND

With development of the mobile terminal technology, mobile terminals have become more and more multifunctional, and have become one kind of the most indispensable tools in the daily work and life. Users usually browse various types of information, such as, texts, pictures, videos and the like, on mobile terminals.

When a picture is displayed on a mobile terminal, the actual size of the picture often exceeds the display range of the screen, for example, in a case where a photo is taken by panoramic photography or a picture is displayed after being zoomed-in. When browsing such a picture, the user may perform a swipe operation on the screen using his fingers, such that different parts of the picture are translated on the screen. In this way, the user may browse different parts of the picture.

In the implementation of the invention, the inventors have identified that at least the following defects exist in the prior art:
When browsing a picture, users may only swipe on the screen using fingers to browse different parts of the picture. However, such a browsing method is cumbersome and has poor operational flexibility.

Documents JP H10 333821 and US 2011/102455 both disclose an electronic device for controlling a displayed image based on the movements of the electronic device.

Document US 2008/0048980 A1 discloses systems and methods of the invention related to providing a computer device, having a display unit, with an accelerometer to detect movement of the computer device and generate movement data.

Document US 2012/0026197 A1 discloses methods and apparatus for changing the display of content on a mobile computing device.

### SUMMARY

To overcome the defects in the prior art, the invention provides a method and a device for displaying an image. The technical solutions are as follows.

The invention is directed to a method, a device, a computer program and a recording medium according to independent claims 1, 6, 10 and 11 respectively. Preferred embodiments of the invention are recited in the dependent claims.

The technical solutions provided in the embodiments of the invention may achieve the following beneficial effects:
According to embodiments of the invention, in a state where a target image is displayed on a screen, when it is detected that the screen is subjected to a displacement, a direction of the displacement is determined, and the target image is translated on the screen according to the direction of the displacement. In this way, different parts of the target image may be displayed on the screen by moving the mobile terminal. As such, the browsing method may be simplified and operational flexibility may be improved.

It is to be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention, in which:
FIG. 1 is a flowchart of a method for displaying an image according to an exemplary embodiment of the invention;
FIG. 2 is a schematic diagram of a displayed interface according to an exemplary embodiment of the invention;
FIG. 3 is a schematic diagram of a displayed interface according to an exemplary embodiment of the invention;
FIG. 4 is a block diagram of a device for displaying an image according to an exemplary embodiment of the invention; and

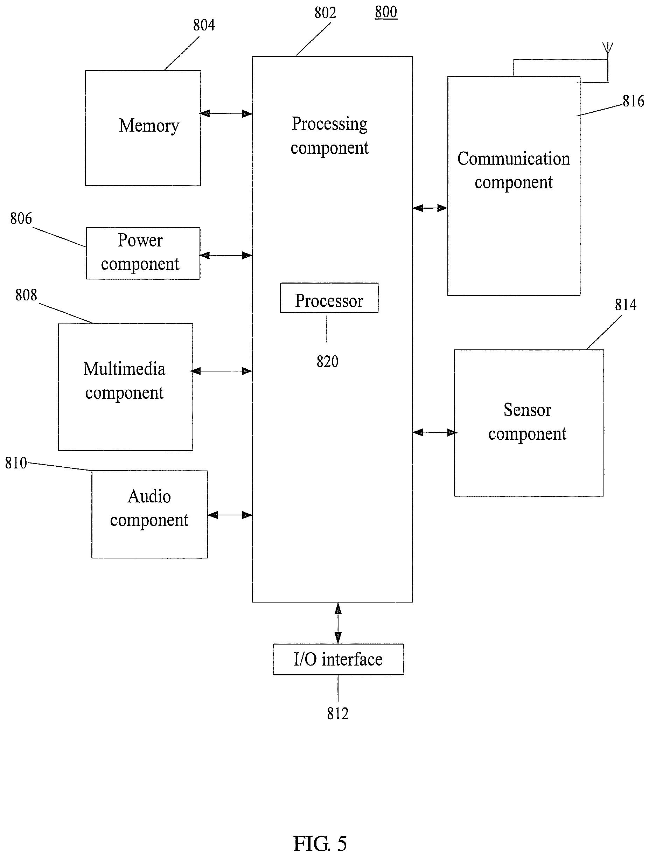

FIG. 5 is a block diagram of a terminal according to an exemplary embodiment of the invention.

The above drawings are used for illustrating the embodiments of the invention given hereinafter, and more details will be given hereinafter. These drawings and textual descriptions are not intended to limit the scope defined in the invention in any way, but intended to describe the inventive concept of the invention, through specific embodiments, for a person skilled in the art.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with aspects related to the invention as recited in the appended claims.

### A first embodiment

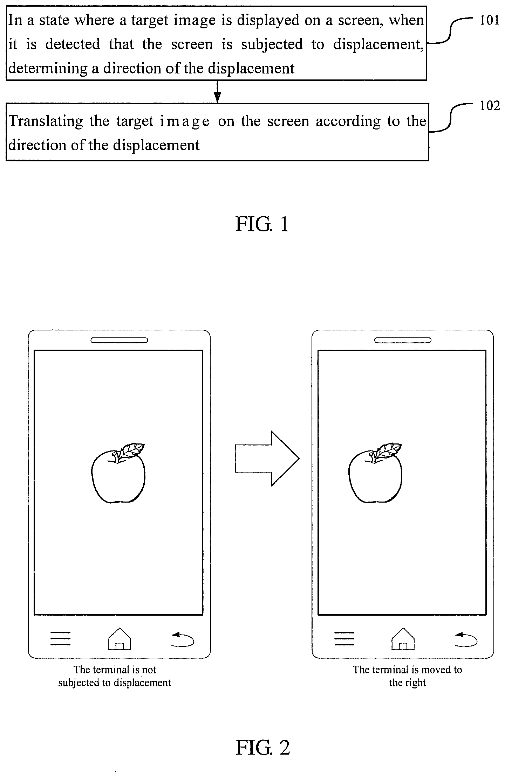

An embodiment of the invention provides a method for displaying an image, wherein a target image is displayed on a screen and the screen is subjected to a displacement. As illustrated in FIG. 1, the processing procedure in the method may include the following steps:
In step 101, a direction of the displacement is determined.

In step 102, the target image is translated on the screen according to the direction of the displacement.

In this document, the term "translate" refers to: if the entire image is displayed on a screen, moving the image on the screen; if some parts of an image are not displayed on a screen (for example because the size of the image exceeds the size of the screen), displaying a non-displayed part of the image on the screen.

According to this embodiment of the invention, in a state where a target image is displayed on a screen, when it is detected that the screen is subjected to a displacement, a direction of the displacement is determined, and the target image is translated on the screen according to the direction of the displacement. In this way, different parts of the target image may be displayed on the screen by moving the mobile terminal. As such, the browsing method may be simplified and operational flexibility may be improved.

### A second embodiment

An embodiment of the present invention provides a method for displaying a picture. The method may be applied to a terminal, such as a mobile phone, a tablet computer, or other mobile terminals. A target image may be a content that can be displayed, such as a picture, a document, or the like. In this embodiment, the technical solution is described in detail with an example in which the method is applied in a mobile phone for displaying a picture as the target image, and the solution is similar for other cases which will not be repeated herein.

The processing procedure as illustrated in FIG. 1 is described in detail hereinafter with reference to specific embodiments, wherein a target image is displayed on a screen and the screen is subjected to a displacement.

In step 101, a direction of the displacement is determined.

In the embodiment, the size of the target image may exceed the size of the screen. For example, the target image may be a photo that is taken by panoramic photography or a photo or document that is displayed after being zoomed in.

In the implementation, a user may install an application program for browsing pictures on the terminal. When the user needs to browse a picture (i.e., the target image), the user may start the application program, and click an icon corresponding to the picture in a picture list provided by the application program, such that the picture is displayed on the screen of the terminal. The size of the picture may be greater than the size of the screen. In this way, a part of the picture may be displayed on the screen. When the user desires to change the part of the picture which is to be displayed on the screen, the user may move the terminal. In this case, the terminal may detect a signal sent by a corresponding sensor (for example, a gyroscope, an acceleration sensor, or the like), and thus determine that the terminal is subjected to a displacement. In this way, the terminal may further determine the direction of the displacement. For example, when the user opens a panoramic photograph on the terminal and brows the panoramic photograph, the user moves the terminal to the right, then the terminal may detect that it is subjected to a displacement, and may further determine the direction of the displacement as to the right.

Optionally, the terminal may determine a direction component of the displacement along a plane where the screen is located; and correspondingly the process in step 101 may be: determining a direction component of the displacement along a plane where the screen is located as a first direction.

In implementation, the user may move the terminal in any direction. The user may, instead of moving the terminal exactly within the plane where the screen is located, for example, move the terminal in the right forward direction of the screen. Upon detecting that the terminal is subjected to this displacement, the terminal may determine, according to a signal from the sensor, the direction component of the displacement along the plane where the screen is located. For example, in a case where the user holds and moves the terminal in the right forward direction of the screen, upon detecting that the terminal is subjected to this displacement, the terminal may determine that the direction component of the displacement along the plane where the screen is located is to the right.

Optionally, the terminal may also acquire a distance component of the displacement along the plane where the screen is located; and correspondingly the process in step 101 may be: determining a direction component of the displacement along a plane where the screen is located as a first direction and determining a distance component of the displacement along the plane where the screen is located as a first distance.

In the implementation, upon detecting that the terminal is subjected to a displacement, the terminal may determine the direction component of the displacement along the plane where the screen is located and determine the distance component of the displacement along the plane where the screen is located. For example, when the user holds the terminal and moves it in the right forward direction of the screen by 1.414cm at a 45 degree angle with the plane where the screen is located, upon detecting that the terminal is subjected to this displacement, the terminal may determine that the direction component of the displacement along the plane where the screen is located is to the right, and the distance component of the displacement along the plane where the screen is located is 1cm.

Optionally, before it is detected that the terminal is subjected to a displacement, the terminal may enable a sensor configured to detect a displacement of the terminal, and the terminal may enable again the sensor configured to detect a displacement of the screen when displaying an image having a large size; and correspondingly, prior to step 101, the following process may be performed: when it is detected that the full size of the target image displayed on the screen exceeds the size of the screen, enabling a sensor configured to detect a displacement of the screen.

In the implementation, when the terminal detects that a picture is displayed on the screen of the terminal, the terminal may detect the full size of the picture, and compare the full size of the picture with the size of the screen. If the full size of the picture is greater than the size of the screen, the terminal enables the sensor (for example, a gyroscope, an acceleration sensor, or the like), to acquire information regarding the displacement of the terminal. If the full size of the picture is less than the size of the screen, the terminal keeps the sensor disabled. For example, when the user opens a picture on the terminal, the terminal displays the picture in a default size. When the terminal detects that the default size of the picture does not exceed the size of the screen, the terminal does not enable the sensor. If the user zooms in the displayed picture, the terminal may detect the full size of the zoomed-in picture. When the terminal detects that the full size of the picture exceeds the size of the screen, the terminal may enable the sensor. In this way, power consumption of the terminal may be reduced.

Optionally, the terminal may provide a plurality of display control functions, for example, an image translation function and an image zooming function. Hence, the terminal may perform the process in this procedure in a state where the image translation function is enabled. Correspondingly, the process in step 101 may be: determining, if an image translation function is enabled, a direction component of the displacement along a plane where the screen is located as a first direction.

In the implementation, in the above exemplary application program, both the image translation function and the image zooming function may be enabled, and manners for enabling these two functions may be provided. For example, the image zooming function may be set as enabled when the screen is touched, and correspondingly, the image translation function may be enabled when the screen is not touched. When the user desires to translate the picture, the user may keep his or her finger not to touch the screen. In this way, the terminal does not detect that screen is touched, and thus enables the image translation function. When the user holds the terminal and moves it, the terminal may determine the direction component of the displacement along the plane where the screen is located upon detecting that the terminal is subjected to the displacement. For example, if the user does not touch the screen, the terminal does not detect that the screen is touched, and thus enables the image translation function; and when the user holds the terminal and moves it in the right forward direction, the terminal may determine that the direction component of the displacement along the plane where the screen is located is to the right.

In step 102, the target image is translated on the screen according to the direction of the displacement.

In the implementation, upon determining the direction of the displacement, the terminal may translate the picture on the screen in a direction opposite to the direction of the displacement according to a preset displacement speed, and cease translating the picture on the screen when detecting that the displacement of the screen ceases.

Optionally, in a case where the direction component of the displacement along the plane where the screen is located is determined as the first direction; and correspondingly, the process in step 102 may be: translating the target image on the screen in a direction opposite to the first direction.

In the implementation, upon determining the direction component of the displacement along the plane where the screen is located as the first direction, the terminal may translate the picture on the screen in a direction opposite to the first direction. For example, as illustrated in FIG. 2, upon determining that the direction component of the displacement along the plane where the screen is located is to the right, the terminal translates the picture on the screen in the left direction.

Optionally, a condition for ceasing the translation may be defined; and correspondingly, the process in step 102 may be: when it is detected that a boundary of the target image in the first direction coincides with a boundary of the screen in the first direction, ceasing translating the target image.

In the implementation, upon determining the direction component of the displacement along the plane where the screen is located as the first direction, the terminal may translate the picture on the screen in a direction opposite to the first direction, until the boundary of the picture in the first direction coincides with the boundary of the screen in the first direction. For example, if the direction component of the displacement along the plane where the screen is located is determined as to the right, the terminal translates the picture on the screen in the left direction, until the right boundary of the picture coincides with the right boundary of the screen.

Optionally, in a case where the distance component of the displacement along the plane where the screen is located as the first distance; and correspondingly, the process in step 102 may be: translating the target image on the screen in a direction opposite to the first direction according to the first distance.

In the implementation, the terminal may be configured with a linear relationship (for example, the translation distance is 1.5 or 2 times the first distance, or the like) between the translation distance of the picture and the first distance. Upon determining the direction component of the displacement along the plane where the screen is located as the first direction and determining the distance component of the displacement along the plane where the screen is located as the first distance, the terminal translates the picture in a direction opposite to the first direction, and the translation distance is determined by the first distance and the linear relationship. For example, if a linear relationship between the translation distance and the first distance is 2:1, upon determining that the direction component of the displacement along the plane where the screen is located is to the right, and the distance component of the displacement along the plane where the screen is located is 1cm, the terminal translates the picture displayed on the screen to the left by 2cm.

In the embodiments of the invention, corresponding to the image translation function, an image zooming function may also be provided; and correspondingly, in a state where the image zooming function is enabled, the terminal may perform the following steps.

In step 1, in a state where a target image is displayed on a screen and an image zooming function is enabled, when it is detected that the screen is subjected to a displacement, a direction component of the displacement perpendicular to the screen is determined as a second direction.

In the implementation, in the above exemplary application program, both the image translation function and the image zooming function may be provided, and manners for enabling these two functions may be provided. For example, the target zooming function may be set as enabled when the screen is touched, and correspondingly the image translation function may be set as enabled when the screen is not touched. When the user desires to zoom in or zoom out the picture, the user may touch the screen with his or her finger. In this way, the terminal may detect that the screen is touched, and thus enable the image zooming function. When the user holds the terminal and moves it, the terminal may determine the direction component of the displacement perpendicular to the screen upon detecting that the terminal is subjected to the displacement. For example, when the user touches the screen with his or her finger, the terminal may detect that the screen is touched, and then enables the image zooming function; when the user holds the terminal and moves it in the right forward direction of the screen, the terminal may determine that the direction component of the displacement perpendicular to the screen is the forward direction of the screen upon detecting that the terminal is subjected to the displacement.

Optionally, the terminal may determine how to zoom the picture with reference to the direction component and distance component of the displacement perpendicular to the screen; and correspondingly, the process in step 1 may be: in a state where a target image is displayed on the screen and the image zooming function is enabled, when it is detected that the screen is subjected to a displacement, determining a direction component of the displacement perpendicular to the screen as a second direction, and determining a distance component of the displacement perpendicular to the screen as a second distance.

In the implementation, in a state where the image zooming function is enabled, upon detecting that the terminal is subjected to a displacement, the terminal may determine the direction component (i.e., the second direction) of the displacement perpendicular to the screen, and the distance component (i.e., the second distance) of the displacement perpendicular to the screen. For example, when the user holds the terminal and moves it in the right forward direction of the screen by 1.414cm at a 45 degree angle with a plane where the screen is located, upon detecting that the terminal is subjected to the displacement, the terminal may determine that the direction component of the displacement perpendicular to the screen is in the forward direction of the screen, and the distance component of the displacement perpendicular to the screen is 1cm.

In step 2, the displayed target image is zoomed according to the second direction.

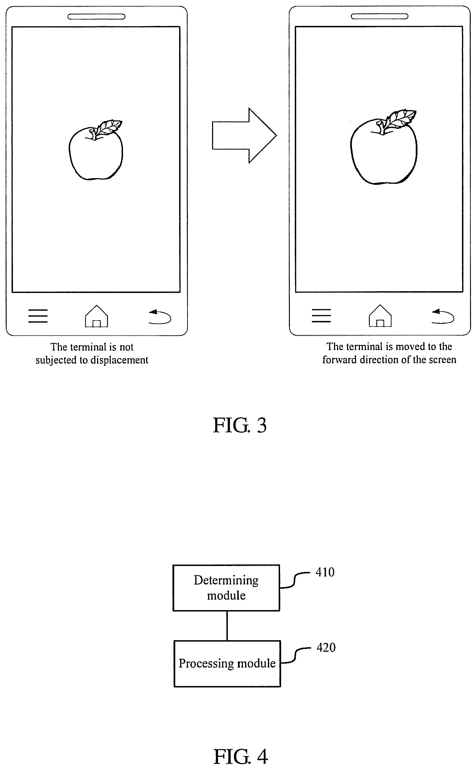

In the implementation, the terminal may be configured with a zooming factor for the zooming process; and in a state where the image zooming function is enabled, upon determining the direction component of the displacement perpendicular to the screen as the second direction, the terminal zooms in or zooms out the picture according to the zooming factor, as illustrated in FIG. 3. For example, if the terminal is configured with a zooming factor (of the size of a zoomed-in picture to the size of the original picture) that is 3:1, and configured with a zooming factor (of the size of a zoomed-out picture to the size of the original picture) that is 1:4, the terminal may zoom in or zoom out the picture according to the corresponding zooming factor.

Optionally, in a case where the direction component of the displacement perpendicular to the screen is determined as the second direction, the terminal may be configured with a correspondence relationship between the second direction and the zooming process; and correspondingly, the process in step 2 may be: zooming in the target image if the second direction is in the forward direction of the screen, and zooming out the target image if the second direction is in the backward direction of the screen.

Optionally, in a case where the distance component of the displacement perpendicular to the screen is determined as the second distance, the process in step 2 may be: determining a zooming factor corresponding to the second direction and the second distance according to a pre-stored correspondence relationship among directions, distances and zooming factors; and zooming the displayed target image according to the determined zooming factor.

In the implementation, the terminal may be configured with a correspondence relationship among directions, distances and zooming factors. In the correspondence relationship, if the direction component of the displacement perpendicular to the screen is in the forward direction of the screen, there is a first linear relationship between the distance and the zooming factor. For example, the first linear relationship may be that a zoom-in factor is increased by 0.5 each time the distance component of the displacement perpendicular to the screen is increased by 1cm. In the correspondence relationship, if the direction component of the displacement perpendicular to the screen is in the backward direction of the screen, there is a second linear relationship between the distance and the zooming factor. For example, the second linear relationship may be that a zoom-out factor is reduced by 0.01 each time the distance component of the displacement perpendicular to the screen is increased by 1cm.

Upon determining that the direction component of the displacement perpendicular to the screen as the second direction, and determining that the distance component of the displacement perpendicular to the screen as the second distance, the terminal may determine a linear relationship (the first linear relationship or the second linear relationship) corresponding to the second direction, and hence further determine a zooming factor according to the second distance and the determined linear relationship. For example, upon determining that the direction component of the displacement perpendicular to the screen is in the forward direction of the screen, the terminal may determine that a linear relationship corresponding to the direction is the first linear relationship. By reusing the above example, if the distance component of the displacement perpendicular to the screen is 1cm, the zoom-in factor is 1.5 (i.e. increased by 1*0.5); and if the distance component of the displacement perpendicular to the screen is 2cm, the zoom-in factor is 2 (i.e. increased by 2*0.5). Upon determining that the direction component of the displacement perpendicular to the screen is in the backward direction of the screen, the terminal may determine that a linear relationship corresponding to the direction is the second linear relationship. By reusing the above example, if the distance component of the displacement perpendicular to the screen is 1cm, the zoom-out factor is 0.99 (i.e. reduced by 1*0.01); and if the distance component of the displacement perpendicular to the screen is 2cm, the zoom-out factor is 0.98 (i.e. reduced by 2*0.01).

According to embodiments of the invention, in a state where a target image is displayed on a screen, when it is detected that the screen is subjected to a displacement, a direction of the displacement is determined, and the target image is translated on the screen according to the direction of the displacement. In this way, different parts of the target image may be displayed on the screen by moving the terminal. As such, the browsing method may be simplified and operational flexibility may be improved.

### A third embodiment

Based on the same technical concept, an embodiment of the invention further provides a device for displaying an image. As illustrated in FIG. 4, the device includes a determining module 410 and a processing module 420.

The determining module 410 is configured to: in a state where a target image is displayed on a screen, when it is detected that the screen is subjected to a displacement, determine a direction of the displacement.

The processing module 420 is configured to translate the target image on the screen according to the direction of the displacement.

Optionally, the determining module 410 is configured to:
in a state where a target image is displayed on a screen, when it is detected that the screen is subjected to a displacement, determine a direction component of the displacement along a plane where the screen is located as a first direction.

The processing module 420 is configured to:
translate the target image on the screen in a direction opposite to the first direction.

Optionally, the processing module 420 is configured to:
when it is detected that a boundary of the target image in the first direction coincides with a boundary of the screen in the first direction, cease translating the target image.

Optionally, the determining module 410 is configured to:
in a state where a target image is displayed on a screen, when it is detected that the screen is subjected to a displacement, determine a direction component of the displacement along a plane where the screen is located as a first direction, and determine a distance component of the displacement along the plane where the screen is located as a first distance.

The processing module 420 is configured to:
translate the target image on the screen in a direction opposite to the first direction according to the first distance.

Optionally, the determining module 410 is configured to:
in a state where a target image is displayed on a screen and an image translation function is enabled, when it is detected that the screen is subjected to a displacement, determine a direction component of the displacement along a plane where the screen is located as a first direction.

The determining module 410 is configured to:
in a state where a target image is displayed on a screen and an image zooming function is enabled, when it is detected that the screen is subjected to a displacement, determine a direction component of the displacement perpendicular to the screen as a second direction.

The processing module 420 is configured to:
zoom the displayed target image according to the second direction.

Optionally, the determining module 410 is configured to:
in a state where a target image is displayed on a screen and an image zooming function is enabled, when it is detected that the screen is subjected to a displacement, determine a direction component of the displacement perpendicular to the screen as a second direction, and determine a distance component of the displacement perpendicular to the screen as a second distance.

The processing module 420 is configured to:
determine a zooming factor corresponding to the second direction and the second distance according to a pre-stored correspondence relationship among directions, distances and zooming factors; and
zoom the displayed target image according to the determined zooming factor.

Optionally, the processing module 420 is configured to:
zoom in the target image if the second direction is in the forward direction of the screen; and
zoom out the target image if the second direction is in the backward direction of the screen.

Optionally, the device further includes:
an enabling module, configured to: when it is detected that the full size of the target image displayed on the screen exceeds the size of the screen, enable a sensor configured to detect a displacement of the screen.

According to embodiments of the invention, in a state where a target image is displayed on a screen, when it is detected that the screen is subjected to a displacement, a direction of the displacement is determined, and the target image is translated on the screen according to the direction of the displacement. In this way, different parts of the target image may be displayed on the screen by moving the terminal. As such, the browsing method may be simplified and operational flexibility may be improved.

With respect to the devices in the above embodiment, the specific implementations of operations executed by various modules thereof have been in detail described in the embodiments illustrating the methods, which are not described herein any further.

It should be noted that, during the displaying of a picture by the devices for displaying an image according to the above embodiments, the devices are described by using division of the above functional modules as examples. In practice, the functions may be assigned to different functional modules for implementation as required. To be specific, the internal structure of the device is divided into different functional modules to implement all or part of the above-described functions. In addition, the devices for displaying an image according to the above embodiments are based on the same inventive concept as the methods for displaying an image according to the embodiments of the invention. The specific implementation is elaborated in the method embodiments, which is not be described herein any further.

### A fourth embodiment

An embodiment of the invention further illustrates a schematic structural diagram of a terminal 800. The terminal 800 may be a mobile phone or the like.

Referring to Fig. 8, the device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the device 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 800. The power component 806 may include a power management system, one or more power sources, and any other components associated with the generation, management, and distribution of power in the device 800.

The multimedia component 808 includes a screen providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the device 800 is in an operation mode, such as a call mode, a recording mode, and a voice recognition mode. The received audio signal may be further stored in the memory 804 or transmitted via the communication component 816.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the device 800. For instance, the sensor component 814 may detect an open/closed status of the device 800, relative positioning of components, e.g., the display and the keypad, of the device 800, a change in position of the device 800 or a component of the device 800, a presence or absence of user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the device 800 and other devices. The device 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 804, executable by the processor 820 in the device 800, for performing the above-described methods. For example, the non-transitory computer-readable storage medium may be a ROM, a RAM, a CD-ROM, a magnetic tape, a floppy disc, an optical data storage device, and the like.

A non-transitory computer-readable storage medium is provided. When instructions stored in the storage medium are executed by a processor of a terminal, the terminal is caused to perform a method for displaying an image, wherein the method includes:
in a state where a target image is displayed on a screen, when it is detected that the screen is subjected to a displacement, determining a direction of the displacement; and
translating the target image on the screen according to the direction of the displacement.

Optionally, in a state where a target image is displayed on a screen, when it is detected that the screen is subjected to a displacement, determining a direction of the displacement includes:
in a state where a target image is displayed on a screen, when it is detected that the screen is subjected to a displacement, determining a direction component of the displacement along a plane where the screen is located as a first direction.

Translating the target image on the screen according to the direction of the displacement includes:
translating the target image on the screen in a direction opposite to the first direction.

Optionally, the method further includes:
when it is detected that a boundary of the target image in the first direction coincides with a boundary of the screen in the first direction, ceasing translating the target image.

Optionally, in a state where a target image is displayed on a screen, when it is detected that the screen is subjected to a displacement, determining a direction component of the displacement along a plane where the screen is located as a first direction includes:
in a state where a target image is displayed on a screen, when it is detected that the screen is subjected to a displacement, determining a direction component of the displacement along a plane where the screen is located as a first direction, and determining a distance component of the displacement along the plane where the screen is located as a first distance.

Translating the target image on the screen in a direction opposite to the first direction includes:
translating the target image on the screen in a direction opposite to the first direction according to the first distance.

Optionally, in a state where a target image is displayed on a screen, when it is detected that the screen is subjected to a displacement, determining a direction component of the displacement along a plane where the screen is located as a first direction includes:
in a state where a target image is displayed on a screen and an image translation function is enabled, when it is detected that the screen is subjected to a displacement, determining a direction component of the displacement along a plane where the screen is located as a first direction;

The method further includes:
in a state where a target image is displayed on a screen and an image zooming function is enabled, when it is detected that the screen is subjected to a displacement, determining a direction component of the displacement perpendicular to the screen as a second direction; and
zooming the displayed target image according to the second direction.

Optionally, in a state where a target image is displayed on a screen and an image zooming function is enabled, when it is detected that the screen is subjected to a displacement, determining a direction component of the displacement perpendicular to the screen as a second direction includes:
in a state where a target image is displayed on a screen and an image zooming function is enabled, when it is detected that the screen is subjected to a displacement, determining a direction component of the displacement perpendicular to the screen as a second direction, and determining a distance component of the displacement perpendicular to the screen as a second distance.

Zooming the displayed target image according to the second direction includes:
determining a zooming factor corresponding to the second direction and the second distance according to a pre-stored correspondence relationship among directions, distances and zooming factors; and
zooming the displayed target image according to the determined zooming factor.

Optionally, zooming the displayed target image according to the second direction includes:
zooming in the target image if the second direction is in the forward direction of the screen; and
zooming out the target image if the second direction is in the backward direction of the screen.

Optionally, in a state where a target image is displayed on a screen, when it is detected that the screen is subjected to a displacement, before the determining a direction of the displacement, the method further comprises the step of:
when it is detected that the full size of the target image displayed on the screen exceeds the size of the screen, enabling a sensor for detecting a displacement of the screen.

According to embodiments of the invention, in a state where a target image is displayed on a screen, when it is detected that the screen is subjected to a displacement, a direction of the displacement is determined, and the target image is translated on the screen according to the direction of the displacement. In this way, different parts of the target image may be displayed on the screen by moving the terminal. As such, the browsing method may be simplified and operational flexibility may be improved.

## Claims

1. A method for displaying an image, wherein a target image is displayed on a screen and it is detected that the screen is subjected to a displacement, the method comprises steps
determining (101) a direction of the displacement; and
translating (102) the target image on the screen according to the direction of the displacement;
wherein, the step (101) of determining a direction of the displacement comprises a step of:
determining a direction component of the displacement along a plane where the screen is located as a first direction; and
the step (102) of translating the target image on the screen according to the direction of the displacement comprises a step of:
translating the target image on the screen in a direction opposite to the first direction;
the method further comprises a step of :
when it is detected that a boundary of the target image in the first direction coincides with a boundary of the screen in the first direction, ceasing translating the target image,
**characterized in that** the method comprises:
when it is detected that a full size of the target image displayed on the screen exceeds a size of the screen, enabling a sensor for detecting the displacement of the screen.

2. The method according to claim 1, wherein, the step of determining a direction component of the displacement along a plane where the screen is located as a first direction comprises a step of :
determining a distance component of the displacement along the plane where the screen is located as a first distance; and
the step of translating the target image on the screen in a direction opposite to the first direction comprises a step of :
translating the target image on the screen in a direction opposite to the first direction according to the first distance.

3. The method according to claim 1 or 2, wherein, the step of determining a direction component of the displacement along a plane where the screen is located as a first direction comprises a step of :
determining, a direction component of the displacement along a plane where the screen is located as a first direction when an image translation function is enabled; and
the method further comprises steps of:
determining, a direction component of the displacement perpendicular to the screen as a second direction when an image zooming function is enabled; and
zooming the displayed target image according to the second direction.

4. The method according to claim 3, wherein, the step of determining, if an image zooming function is enabled, a direction component of the displacement perpendicular to the screen as a second direction comprises a step of :
determining a distance component of the displacement perpendicular to the screen as a second distance; and
the step of zooming the displayed target image according to the second direction comprises steps of :
determining a zooming factor corresponding to the second direction and the second distance according to a pre-stored correspondence relationship among directions, distances and zooming factors; and
zooming the displayed target image according to the determined zooming factor.

5. The method according to claim 3 or 4, wherein, the step of zooming the displayed target image according to the second direction comprises steps of:
zooming in the target image if the second direction is in the forward direction of the screen; and
zooming out the target image if the second direction is in the backward direction of the screen.

6. A device for displaying an image comprising a determining module (410) configured to detect that a target image is displayed on a screen and the screen is subjected to a displacement, the device comprises:
the determining module (410), configured to determine a direction of the displacement; and
a processing module (420), configured to translate the target image on the screen according to the direction of the displacement;
wherein, the determining module (410) is configured to:
determine a direction component of the displacement along a plane where the screen is located as a first direction; and
the processing module (420) is configured to:
translate the target image on the screen in a direction opposite to the first direction;
the processing module (420) is further configured to:
when it is detected that a boundary of the target image in the first direction coincides with a boundary of the screen in the first direction, cease translating the target image,
**characterized in that** the device further includes:
an enabling module, configured to: when it is detected that the full size of the target image displayed on the screen exceeds the size of the screen, enable a sensor for detecting the displacement of the screen..

7. The device according to any one of claims 6, wherein, the determining module (410) is further configured to:
determine a distance component of the displacement along the plane where the screen is located as a first distance; and
the processing module (420) is further configured to: translate the target image on the screen in a direction opposite to the first direction according to the first distance.

8. The device according to claim 6 or 7, wherein, the determining module (410) is configured to:
determine, a direction component of the displacement along a plane where the screen is located as a first direction when an image function is enabled;
the determining module (410) is further configured to:
determine, a direction component of the displacement perpendicular to the screen as a second d direction when an image zooming function is enabled; and
the processing module (420) is further configured to:
zoom the displayed target image according to the second direction.

9. The device according to claim 8, wherein, the determining module (410) is further configured to:
determine a distance component of the displacement perpendicular to the screen as a second distance; and
the processing module (420) is further configured to:
determine a zooming factor corresponding to the second direction and the second distance according to a pre-stored correspondence relationship among directions, distances and zooming factors; and
zoom the displayed target image according to the determined zooming factor.

10. A computer program comprising instructions which, when executed by a computer, cause the computer to carry out the steps of any of method claims 1 to 5.

11. A computer-readable medium comprising instructions which, when executed by a computer, cause the computer to carry out the steps of any of method claims 1 to 5.

## Patentansprüche

1. Verfahren zum Anzeigen eines Bildes, wobei ein Zielbild auf einem Bildschirm angezeigt wird und es detektiert wird, dass der Bildschirm einer Verschiebung unterworfen ist, wobei das Verfahren die Schritte umfasst
Bestimmen (101) einer Richtung der Verschiebung und
Umsetzen (102) des Zielbildes auf dem Bildschirm gemäß der Richtung der Verschiebung,
wobei der Schritt (101) des Bestimmens einer Richtung der Verschiebung einen Schritt umfasst des:
Bestimmens einer Richtungskomponente der Verschiebung entlang einer Ebene, wo der Bildschirm angeordnet ist, als einer ersten Richtung, und
der Schritt (102) des Umsetzens des Zielbildes auf dem Bildschirm gemäß der Richtung der Verschiebung einen Schritt umfasst des:
Umsetzens des Zielbildes auf dem Bildschirm in einer der ersten Richtung entgegensetzten Richtung,
wobei das Verfahren ferner einen Schritt umfasst:
wenn detektiert wird, dass eine Grenze des Zielbildes in der ersten Richtung mit einer Grenze des Bildschirms in der ersten Richtung übereinstimmt, Beenden des Umsetzens des Zielbildes,
**dadurch gekennzeichnet, dass** das Verfahren umfasst:
wenn detektiert wird, dass eine volle Größe des auf dem Bildschirm angezeigten Zielbildes eine Größe des Bildschirms übersteigt, Aktivieren eines Sensors zum Detektieren der Verschiebung des Bildschirms.

2. Verfahren nach Anspruch 1, wobei der Schritt des Bestimmens einer Richtungskomponente der Verschiebung entlang einer Ebene, wo der Bildschirm angeordnet ist, als einer ersten Richtung einen Schritt umfasst des:
Bestimmens einer Abstandskomponente der Verschiebung entlang der Ebene, wo der Bildschirm angeordnet ist, als einem ersten Abstand, und
der Schritt des Umsetzens des Zielbildes auf dem Bildschirm in einer der ersten Richtung entgegensetzten Richtung einen Schritt umfasst des:
Umsetzens des Zielbildes auf dem Bildschirm in einer der ersten Richtung entgegengesetzten Richtung gemäß dem ersten Abstand.

3. Verfahren nach Anspruch 1 oder 2, wobei
der Schritt des Bestimmens einer Richtungskomponente der Verschiebung entlang einer Ebene, wo der Bildschirm angeordnet ist, als einer ersten Richtung einen Schritt umfasst des:
Bestimmens einer Richtungskomponente der Verschiebung entlang einer Ebene, wo der Bildschirm angeordnet ist, als einer ersten Richtung, wenn eine Bildumsetzungsfunktion aktiviert ist, und
das Verfahren ferner Schritte umfasst des:
Bestimmens einer Richtungskomponente der zum Bildschirm senkrechten Verschiebung als einer zweiten Richtung, wenn eine Zoom-Funktion aktiviert ist, und
Zoomens des angezeigten Zielbildes gemäß der zweiten Richtung.

4. Verfahren nach Anspruch 3, wobei
der Schritt des Bestimmens einer Richtungskomponente der zum Bildschirm senkrechten Verschiebung als einer zweiten Richtung, wenn eine Bild-Zoom-Funktion aktiviert ist, einen Schritt umfasst des:
Bestimmens einer Abstandskomponente der zum Bildschirm senkrechten Verschiebung als einem zweiten Abstand und
der Schritt des Zoomens des angezeigten Zielbildes gemäß der zweiten Richtung Schritte umfasst des:
Bestimmens eines Zoom-Faktors entsprechend der zweiten Richtung und dem zweiten Abstand gemäß einer vorher gespeicherten Übereinstimmungsbeziehung zwischen Richtungen, Abständen und Zoom-Faktoren, und
Zoomens des angezeigten Zielbildes gemäß dem bestimmten Zoom-Faktor.

5. Verfahren nach Anspruch 3 oder 4, wobei der Schritt des Zoomens des angezeigten Zielbildes gemäß dem zweiten Abstand Schritte umfasst des:
Heranzoomens des Zielbildes, wenn die zweite Richtung in die Vorwärtsrichtung des Bildschirms ist, und
Herauszoomens des Zielbildes, wenn die zweite Richtung in die Rückwärtsrichtung des Bildschirms ist.

6. Vorrichtung zum Anzeigen eines Bildes, die ein Bestimmungsmodul (410) umfasst, das eingerichtet ist, um zu detektieren, dass ein Zielbild auf einem Bildschirm angezeigt wird und der Bildschirm einer Verschiebung unterworfen ist, wobei die Vorrichtung umfasst:
das Bestimmungsmodul (410), das eingerichtet ist, um eine Richtung der Verschiebung zu bestimmen, und
ein Verarbeitungsmodul (420), das eingerichtet ist, um das Zielbild auf dem Bildschirm gemäß der Richtung der Verschiebung umzusetzen,
wobei das Bestimmungsmodul (410) eingerichtet ist zum:
Bestimmen einer Richtungskomponente der Verschiebung entlang einer Ebene, wo der Bildschirm angeordnet ist, als einer ersten Richtung und
das Verarbeitungsmodul (420) eingerichtet ist zum:
Umsetzen des Zielbildes auf dem Bildschirm in einer der ersten Richtung entgegengesetzten Richtung,
wobei das Verarbeitungsmodul (420) ferner eingerichtet ist zum:
Beenden des Umsetzens des Zielbildes, wenn detektiert wird, dass eine Grenze des Zielbildes in der ersten Richtung mit einer Grenze des Bildschirms in der ersten Richtung übereinstimmt,
**dadurch gekennzeichnet, dass** die Vorrichtung ferner umfasst:
ein Aktivierungsmodul, das eingerichtet ist zum: Aktivieren eines Sensors zum Detektieren der Verschiebung des Bildschirms, wenn detektiert wird, dass die volle Größe des auf dem Bildschirm angezeigten Zielbildes die Größe des Bildschirms überschreitet.

7. Vorrichtung nach Anspruch 6, wobei
das Bestimmungsmodul (410) ferner eingerichtet ist zum:
Bestimmen einer Abstandskomponente der Verschiebung entlang der Ebene, wo der Bildschirm angeordnet ist, als einem ersten Abstand und
das Verarbeitungsmodul (420) ferner eingerichtet ist zum:
Umsetzen des Zielbildes auf dem Bildschirm in einer der ersten Richtung entgegengesetzten Richtung gemäß dem ersten Abstand.

8. Vorrichtung nach Anspruch 6 oder 7, wobei
das Bestimmungsmodul (410) eingerichtet ist zum:
Bestimmen einer Richtungskomponente der Verschiebung entlang einer Ebene, wo der Bildschirm angeordnet ist, als einer ersten Richtung, wenn eine Bildfunktion aktiviert ist,
das Bestimmungsmodul (410) ferner eingerichtet ist zum:
Bestimmen einer Richtungskomponente der zum Bildschirm senkrechten Verschiebung als einer zweiten Richtung, wenn eine Bild-Zoom-Funktion aktiviert ist, und
das Verarbeitungsmodul (420) ferner eingerichtet ist zum:
Zoomen des angezeigten Zielbildes gemäß der zweiten Richtung.

9. Vorrichtung nach Anspruch 8, wobei
das Bestimmungsmodul (410) ferner eingerichtet ist zum:
Bestimmen einer Abstandskomponente der zum Bildschirm senkrechten Verschiebung als einer zweiten Richtung und
das Verarbeitungsmodul (420) ferner eingerichtet ist zum:
Bestimmen eines Zoom-Faktors entsprechend der zweiten Richtung und dem zweiten Abstand gemäß einer vorher gespeicherten Übereinstimmungsbeziehung zwischen Richtungen, Abständen und Zoom-Faktoren und
Zoomen des angezeigten Zielbildes gemäß dem bestimmten Zoom-Faktor.

10. Computerprogramm, das Anweisungen umfasst, die, wenn sie durch einen Computer ausgeführt werden, den Computer dazu veranlassen, die Schritte nach einem der Verfahrensansprüche 1 bis 5 auszuführen.

11. Computerlesbares Medium, das Anweisungen umfasst, die, wenn sie durch einen Computer ausgeführt werden, den Computer dazu veranlassen, die Schritte nach einem der Verfahrensansprüche 1 bis 5 auszuführen.

## Revendications

1. Procédé d'affichage d'une image, dans lequel une image cible est affichée sur un écran et il est détecté que l'écran est soumis à un déplacement, ce procédé comprenant les étapes suivantes :
détermination (101) d'une direction du déplacement ; et
translation (102) de l'image cible sur l'écran en fonction de la direction du déplacement ;
l'étape (101) de détermination d'une direction du déplacement comprenant une étape de :
détermination d'une composante de direction du déplacement le long d'un plan dans lequel l'écran est situé dans une première direction ; et
l'étape (102) de translation de l'image cible sur l'écran en fonction de la direction du déplacement comprenant une étape de :
translation de l'image cible sur l'écran dans une direction opposée à la première direction ;
ce procédé comprenant en outre une étape de :
lorsqu'il est détecté qu'une limite de l'image cible dans la première direction coïncide avec une limite de l'écran dans la première direction, arrêt de la translation de l'image cible,
**caractérisé en ce que** le procédé comprend :
lorsqu'il est détecté qu'une taille entière de l'image cible affichée sur l'écran dépasse une taille de l'écran, l'activation d'un capteur pour la détection du déplacement de l'écran.

2. Procédé selon la revendication 1, dans lequel l'étape de détermination d'une composante de direction du déplacement le long d'un plan ou l'écran est situé en tant que première direction comprend une étape de :
détermination d'une composante de distance du déplacement le long du plan dans lequel l'écran est situé en tant que première distance ; et
l'étape de translation de l'image cible sur l'écran dans une direction opposée à la première direction comprend une étape de :
translation de l'image cible sur l'écran dans une direction opposée à la première direction en fonction de la première distance.

3. Procédé selon la revendication 1 ou 2, dans lequel l'étape de détermination d'une composante de direction du déplacement le long d'un plan dans lequel l'écran est situé en tant que première direction comprend une étape de :
détermination d'une composante de direction du déplacement le long d'un plan dans lequel l'écran est situé en tant que première direction lorsqu'une fonction de translation d'image est activée ; et
le procédé comprend en outre des étapes de :
détermination d'une composante de direction du déplacement perpendiculaire à l'écran en tant que deuxième direction lorsqu'une fonction de zoom d'image est activée ; et
zoom de l'image cible affichée en fonction de la deuxième direction.

4. Procédé selon la revendication 3, dans lequel l'étape de détermination, si une fonction de zoom d'image est activée, d'une composante de direction du déplacement perpendiculaire à l'écran en tant que deuxième direction comprend une étape de :
détermination d'une composante de distance du déplacement perpendiculaire à l'écran en tant que deuxième distance ; et
l'étape de zoom de l'image cible affichée en fonction de la deuxième direction comprend des étapes de :
détermination d'un facteur de zoom correspondant à la deuxième direction et à la deuxième distance en fonction d'une relation de correspondance pré-stockée entre des directions, des distances et des facteurs de zoom ; et
zoom de l'image cible affichée en fonction du facteur de zoom déterminé.

5. Procédé selon la revendication 3 ou 4, dans lequel l'étape de zoom de l'image cible affichée en fonction de la deuxième direction comprend des étapes de :
zoom de l'image cible si la deuxième direction est vers l'avant de l'écran ; et
dé-zoom de l'image cible si la deuxième direction est vers l'arrière de l'écran.

6. Dispositif d'affichage d'une image comprenant un module de détermination (410) conçu pour détecter qu'une image cible est affichée sur un écran et que l'écran est soumis à un déplacement, ce dispositif comprenant :
le module de détermination (410) conçu pour déterminer une direction du déplacement ; et
un module de traitement (420) conçu pour translater l'image cible sur l'écran en fonction de la direction du déplacement ;
le module de détermination (410) étant conçu pour :
déterminer une composante de direction du déplacement le long d'un plan dans lequel l'écran est situé en tant que première direction ; et
le module de traitement (420) est conçu pour :
translater l'image cible sur l'écran dans une direction opposée à la première direction ;
le module de traitement (420) étant en outre conçu pour :
lorsqu'il est détecté qu'une limite de l'image cible dans la première direction coïncide avec une limite de l'écran dans la première direction, arrêter la translation de l'image cible,
**caractérisé en ce que** le dispositif comprend en outre :
un module d'activation conçu pour : lorsqu'il est détecté que la taille entière de l'image cible affichée dépasse la taille de l'écran, activer un capteur pour la détection du déplacement de l'écran.

7. Dispositif selon la revendication 6, dans lequel le module de détermination (410) est en outre conçu pour :
déterminer une composante de distance du déplacement le long du plan dans lequel l'écran est situé en tant que première distance ; et
le module de traitement (420) est en outre conçu pour :
translater l'image cible sur l'écran dans une direction opposée à la première direction en fonction de la première distance.

8. Dispositif selon la revendication 6 ou 7, dans lequel le module de détermination (410) est conçu pour :
déterminer une composante de direction du déplacement le long d'un plan dans lequel l'écran est situé en tant que première direction lorsqu'une fonction d'image est activée ;
le module de détermination (410) est en outre conçu pour :
déterminer une composante de direction du déplacement perpendiculaire à l'écran en tant que deuxième direction lorsqu'une fonction de zoom d'image est activée ;
le module de traitement (420) est en outre conçu pour :
zoomer l'image cible affichée en fonction de la deuxième direction.

9. Dispositif selon la revendication 8, dans lequel le module de détermination (410) est conçu pour :
déterminer une composante de distance du déplacement perpendiculaire à l'écran en tant que deuxième distance ; et
le module de traitement (420) est en outre conçu pour :
déterminer un facteur de zoom correspondant à la deuxième direction et à la deuxième distance en fonction d'une relation de correspondance pré-stockée entre des directions, des distances et des facteurs de zoom ; et
zoomer l'image cible affichée en fonction du facteur de zoom déterminé.

10. Programme informatique comprenant des instructions qui, lorsqu'elles sont exécutées par un ordinateur, font en sorte que l'ordinateur exécute les étapes selon l'une des revendications 1 à 5.

11. Support lisible par un ordinateur comprenant des instructions qui, lorsqu'elles sont exécutées par un ordinateur, font en sorte que l'ordinateur exécute les étapes selon l'une des revendications 1 à 5.
